# EUROPEAN PATENT APPLICATION

(11) **EP 1 524 818 A2**
(43) Date of publication of application: **20.04.2005**
(21) Application number: 04002638.7
(22) Date of filing: 06.02.2004
(51) Int. Cl.: H04L 29/08, H04L 12/42

(54) **Data transmission apparatus and data transmission system, and initialization method thereof**

(30) Priority: 16.10.2003 JP 2003356676
(71) Applicant: MATSUSHITA ELECTRIC INDUSTRIAL CO., LTD., Kadoma-shi, Osaka 571-8501 (JP)
(72) Inventor: Umei, Toshitomo, Settsu-shi, Osaka-fu 566-0033 (JP); Katta, Noboru, Itami-shi, Hyogo-ken 664-0017 (JP); Sakai, Takahisa, Amagasaki-shi, Hyogo-ken 661-0953 (JP); Mizuguchi, Yuji, Hirakata-shi, Osaka-fu 573-0165 (JP); Kawada, Hirotsugu, Osaka-shi, Osaka-fu 543-0043 (JP); Akita, Takashi, Osaka-shi, Osaka-fu 532-0022 (JP)
(74) Representative: Balsters, Robert

(57) **Abstract**

Initialization processes of link layers in a data transmission system are started after initialization processes of respective physical layers are completed. Thus, at the time of initialization of the link layers, the respective physical layers can perform communication with each other. As a result, in the data transmission system in which electrical communication is performed, an initialization program (an API which is supplied assuming that physical layers requiring no initialization process are used) designed assuming that physical layers are in a state where they can perform communication during an initialization period of link layers can be used while satisfying the above assumption.

## Description

### BACKGROUND OF THE INVENTION

### Field of the Invention

The present invention relates to data transmission apparatuses and data transmission systems, and initialization methods thereof. More particularly, the present invention relates to a data transmission apparatus and a data transmission system, and an initialization method thereof for initializing data transmission apparatuses connected in a ring topology, etc., by a transmission path.

### Description of the Background Art

Transmission of Internet information or image information within an automobile or the like, as applied in car navigation or ITS (Intelligent Transport Systems) technology in recent years, requires large data transfers andfast communications . Communication methods for transmitting such digitized image and/or voice data, or digital data (e.g., computer data) , are being studied vigorously. There already exists practical implementations of networks for use in digital data transmission within an automobile or the like. Such an on-vehicle network adopts a ring topology as its physical topology. Specifically, a plurality of nodes are connected in a ring topology forming a unidirectional ring-type LAN for which interconnects audio devices, navigation devices, information terminal devices, and the like in a unified manner. One example of an information communication protocol used in a ring-type LAN is MOST (Media Oriented Systems Transport). MOST not only defines a communication protocol but also refers to manners of constructing distributed systems. The data on a MOST network is transmitted on a frame-by-frame basis, such that frames are transmitted sequentially from node to node in one direction.

In the case of a ring-type LAN provided inside an automobile, for example, the radiation noise from the LAN may cause malfunctioning of other electronic devices mounted in the automobile. On the other hand, radiation noise from such other devices should not hinder proper transmission. Therefore, in a conventional ring-type LAN which employs MOST, the nodes are typically interconnected via fiber-optic cables so as to improve noise immunity while preventing electromagnetic waves from being generated. However, as disclosed in International Publication WO 02/30079, inexpensive cables, such as twisted pair cables or coaxial cables, may also be used to perform electrical communications; there have been implementations of this technique which realize a fast data transmission rate exceeding 20 Mbps while reducing radiation noise and improving noise immunity.

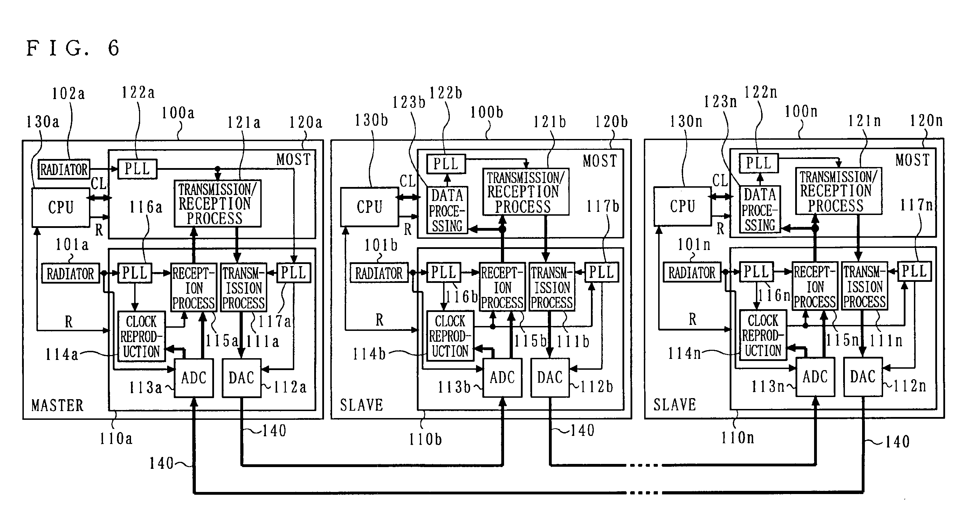

With reference to FIG. 6, a conventional data transmission system will be described. FIG. 6 is a block diagram showing the structure of the conventional data transmission system.

InFIG. 6, thedatatransmissionsystemincludesn-stages (n is an arbitrary integer greater than or equal to two) of data transmission apparatuses 100a to 100n (nodes) performing data transmission/reception. The data transmission apparatuses 100a to 100n are connected to each other in a ring topology via a transmission path 140 which is a coaxial cable or a twisted pair cable. A device (not shown) is connected to each of the data transmission apparatuses 100a to 100n. Each connected device performs processing based on data output from the data transmission apparatus to which it is connected, and outputs the processing results to the data transmission apparatus. Here, the data transmission apparatus 100a is a master which transmits data based on its clock, and other data transmission apparatuses 100b to 100n are slaves which establish clock synchronization with a lock signal which is received from the master and used for establishing clock synchronization. The data transmission apparatuses 100a to 100n have the same structure, and therefore the structure of the master data transmission apparatus 100a and a flow of transmission/reception data will be described first as an example.

The data transmission apparatus 100a includes a transmitting/receiving unit (physical layer) 110a, a MOST controller (link layer) 120a, a CPU 130a, and radiators 101a and 102a. The transmitting/receiving unit 110a includes a transmission processing unit 111a, a DAC (D/A converter) 112a, and an ADC (A/D converter) 113a, a clock reproducing unit 114a, a reception processing unit 115a, and PLLs (Phase Locked Loop) 116a and 117a. Also, the MOST controller 120a includes a transmission/reception processing unit 121a and a PLL 122a.

The data transmission apparatus 100a outputs data to the data transmission apparatus 100b, and receives data from the data transmission apparatus 100n, via the data transmission path 140. Data from the connected device, etc. , connected to the data transmission apparatus 100a is processed in the transmission/reception processing unit 121a of the MOST controller 120a, and output as a digital data string. The transmission processing unit 111a combines a predetermined number of bits of data in the above digital data string to make data symbols, and performs mapping, on the basis of a conversion table, and filtering for the data symbols. Then, the digital signal processed by the transmission processing unit 111a is converted into an analog signal by the DAC 112a, and output to the transmission path 140. The above analog signal is output as a waveform having a predetermined cycle, which is composed of a plurality of signal levels to one of which the above digital data string is mapped. On the other hand, the ADC 113a of the data transmission apparatus 100a receives an analog signal output from the data transmission apparatus 100n via the transmission path 140, and converts it into a digital signal. The reception processing unit 115a decodes the digital signal, which is converted by the ADC 113a, into data symbols by filtering and inverse mapping, converts the data symbols into a digital data string, and outputs it to the transmission/reception processing unit 121a of the MOST controller 120a.

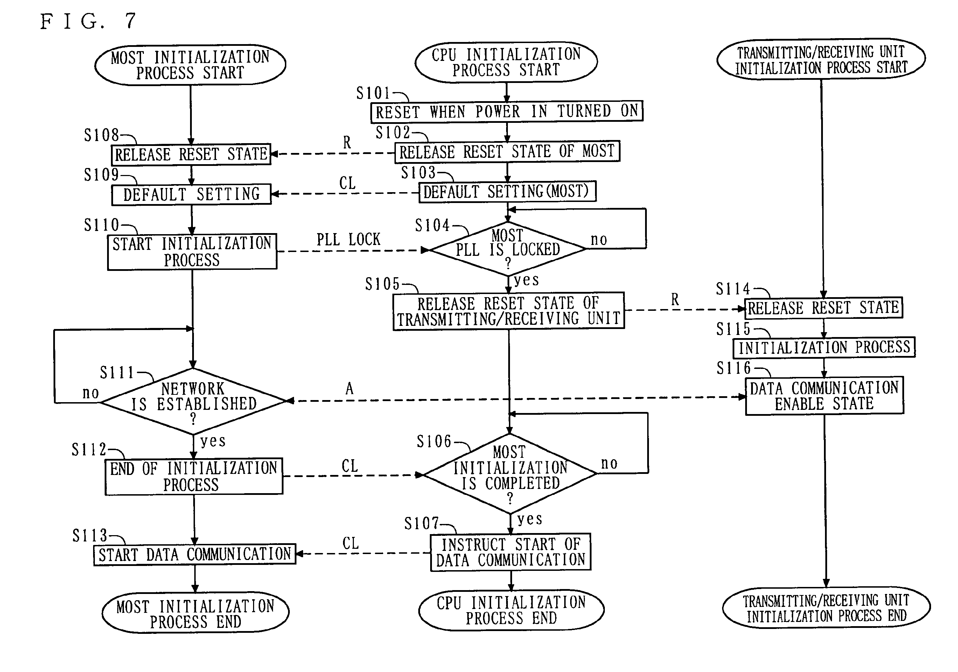

In the data transmission system structured as described above, in order to define a mechanical connection, an initialization process is performed for the MOST controllers 120a to 120n, which are protocol link layers, and the transmission/reception units 110a to 110n, which are protocol physical layers, and establishment of clock synchronization (lock process) of the data transmission apparatuses 100a to 100n and setting of evaluation levels (training process) used as a reference for data evaluation are performed during the initialization operation. Hereinafter, with reference to FIGS. 6 and 7, the initialization process in the above data transmission system will be described. Note that FIG. 7 is a flowchart showing an initialization process of the master data transmission apparatus 100a in the data transmission system.

First, the CPU 130a of the data transmission apparatus 100a is reset when power is turned on (step S101), and outputs, to the MOST controller 120a, a reset signal R for releasing a reset state of the MOST controller 120a (step S102). Then, the CPU 130a outputs, to the MOST controller 120a, a control signal CL for resetting the MOST controller 120a to its default setting (step S103).

The MOST controller 120a exits from a reset state in response to reception of the reset signal R (step S108), and resets itself to its default setting in response to reception of the control signal CL (step S109). Then, the MOST controller 120a starts an initialization process for itself (link layer) (step S110) , and provides notification to the CPU 130a if the radiator 102a and the PLL 122a are locked during the above initialization process.

The CPU 130a waits for the PLL 122a of the MOST controller 120a to be locked (step S104). When the PLL 122a is locked, the CPU 130a outputs, to the transmitting/receiving unit 110a, a reset signal R for releasing a reset state of the transmitting/receiving unit 110a (step S105).

The transmitting/receiving unit 110a exits from a reset state in response to reception of the reset signal R (step S114), and starts an initialization process for itself (physical layer) (step S115). In the above initialization process, the transmitting/receiving units 110b to 110n, which are other protocol physical layers, are also initialized in order to define a mechanical connection. Specifically, the transmitting/receiving unit 110a locks its PLL 117a, and sends a lock signal based on its clock to the data transmission apparatus 100b. The transmitting/receiving unit 110b of the slave data transmission apparatus 100b performs clock reproduction, by a PLL 116b and a clock reproducing unit 114 b, for the received lock signal, establishes clock synchronization by locking a PLL 117b, and sends a lock signal based on its clock to data transmission apparatus connected to a next stage. Likewise, the transmitting/receiving unit 110n of the slave data transmission apparatus 100n performs clock reproduction, by a PLL 116n and a clock reproducing unit 114n, for the lock signal transmitted and received from the previous-stage data transmission apparatus, establishes clock synchronization by locking a PLL 117n, and sends a lock signal based on its clock to the master data transmission apparatus 100a connected to a next stage. Then, the transmitting/receiving unit 110a of the master data transmission apparatus 100a performs clock reproduction, by the PLL 116a and the clock reproducing unit 114a, for the received lock signal, whereby clock synchronization of the entire data transmission system is established.

After clock synchronization of the entire data transmission system is established, the transmitting/receiving unit 110a of the master data transmission apparatus 100a sends, to the data transmission apparatus 100b, a training signal for setting evaluation levels used as a reference for data evaluation. The transmitting/receiving unit 110b of the slave data transmission apparatus 100b sends its training signal to the data transmission apparatus connected to a next stage while setting evaluation levels used thereby for data evaluation with the data transmission apparatus 100a using the received training signal. Likewise, the transmitting/receiving unit 110n of the slave data transmission apparatus 100n sends its training signal to the data transmission apparatus 100a while setting evaluation levels used thereby for data evaluation with the previous-stage data transmission apparatus using the training signal transmitted and received from the previous-stage data transmission apparatus. Then, the transmitting/receiving unit 110a of the master data transmission apparatus 100a sets evaluation levels used thereby for data evaluation with the data transmission apparatus 100n using the received training signal, whereby evaluation levels of the entire data transmission system are set. As a result, the transmitting/receiving units 110a to 110n in the data transmission system go into a state where they can perform data communication (step S116).

On the other hand, the MOST controller 120a waits for a network of the entire data transmission system to be established during the initialization process started in step S110 (step S111). For example, the MOST controller 120a (link layer) sends a network establishment verification signal A via the transmitting/receiving unit 110a (physical layer) of the data transmission system, and determines that the network is established if the MOST controller 120a receives the network establishment verification signal A more than once via other data transmission apparatuses 100b to 100n and the transmitting/receiving unit 110a. That is, after the transmitting/receiving units 110a to 110n of the data transmission system go into a state where they can perform data communication in step S116, the MOST controller 120a can determine whether or not the network is established. After the network is established, the MOST controller 120a ends the process for initializing itself (link layer) , and outputs a control signal CL indicating the end of the initialization process to the CPU 130a (step S112).

The CPU 130a waits for the initialization process of the MOST controller 120a to be ended (step S106), and determines that the initialization process is ended in response to reception of the control signal CL indicating the end of the initialization process. Then, the CPU 130a outputs, to the MOST controller 120a, a control signal CL instructing start of data communication (step S107). The MOST controller 120a receives the control signal CL instructing start of data communication, and starts data communication with other data transmission apparatuses (step S113), whereby the initialization process of the master data transmission apparatus 100a is ended. Note that initialization processes of the MOST controllers 120b to 120n of the respective slave data transmission apparatuses 100b to 100n are performed when the respective CPUs 130b to 130n release reset states of the MOST controllers 120b to 120n after initialization processes of the respective transmitting/receiving units 110b to 110n are ended.

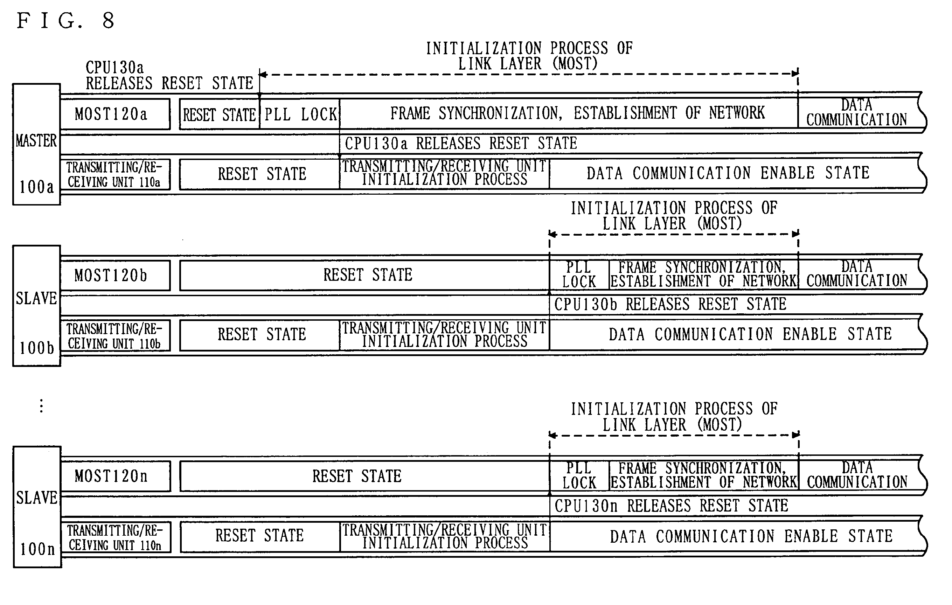

FIG. 8 is a time-series initialization sequence diagram showing initialization of the respective data transmission apparatuses 100a to 100n in the initialization process of the link and physical layers of the above data transmission system. In the initialization process of the master data transmission apparatus 100a, an initialization period of the link layer (MOST controller 120a) includes an initialization period of the physical layers (transmitting/receiving units 110a to 110n), which results in a prolonged initialization period of the link layer. If an initialization program is supplied as an API (Application Program Interface), which is designed assuming that physical layers requiring no initialization process are used, the physical layers have to be in a state where they can perform communication during the initialization period of the link layer. Thus, if the above initialization program is executed by electrical communication using the above transmitting/receiving units 110b to 110n, the physical layers (transmitting/receiving units 110b to 110n) are not always in a state where they can perform communication, whereby some definitions included in the above initialization program may cause accidental failures. Also, in order to execute the above initialization program without accidental failures by electrical communication using the above transmitting/receiving units 110b to 110n, it is necessary to make a modification to the above initialization program with regard to the initialization period of the transmitting/receiving units 110b to 110n, which results in increased development costs.

### SUMMARY OF THE INVENTION

Therefore, an object of the present invention is to provide a data transmission apparatus, a data transmission system, and an initialization method thereof, which can perform an initialization process of data communication while preventing accidental failures without increase of development costs, when link and physical layers are initialized for performing electrical communication with each other.

The present invention has the following features to attain the object mentioned above (notes in parentheses indicate exemplary elements which can be found in the embodiments to follow, though such notes are not intended to limit the scope of the invention).

A data transmission apparatus (1a) of the present invention generates a transmission signal (electric signal) corresponding to data (digital data string) to be processed based on a predetermined communication protocol, and transmits/receives the transmission signal. The data transmission apparatus comprises a processing unit (20a) for processing transmission/reception data based on the communication protocol, a transmitting/receiving unit (10a) for generating a transmission signal based on the transmission data processed by the processing unit and outputting the resultant signal, and generating reception data based on a transmission signal output from other data transmission apparatus (1b to 1n) and outputting the resultant data to the processing unit, transmitting/receiving unit initialization means (data transmission apparatus 1 performing steps S12 to S18, S28 to S33; hereinafter, only a step number is shown) for initializing the transmitting/receiving unit (10a) so that the transmitting/receiving unit (10a) is operable to perform transmission/reception with other transmitting/receiving units (10b to 10n) of other data transmission apparatuses, and processing unit initialization means (S19 to S22 , S24 to S26) for initializing the processing unit (20a) so that the processing unit (20a) is operable to perform data communication with other processing units (20b to 20n) of other data transmission apparatuses via the transmitting/receiving unit after the transmitting/receiving unit initialization means initializes the transmitting/receiving unit.

The transmitting/receiving unit initialization means may initialize the transmitting/receiving unit by establishing clock synchronization (S29, S30) between the transmitting/receiving unit and other transmitting/receiving units of other data transmission apparatuses. Also, the transmitting/receiving unit initialization means may include clock synchronization establishment notification means (S301) for notifying the processing unit initialization means of establishment of clock synchronization (clock synchronization completion flag I1) when the clock synchronization is established. In this case, the processing unit initialization means starts initialization (S19), in response to clock synchronization establishment notification made by the clock synchronization establishment notification means (S14), by which the processing unit is operable to perform data communication with other processing units of other data transmission apparatuses via the transmitting/receiving unit. Furthermore, if no clock synchronization establishment notification is made by the clock synchronization establishment notification means within a predetermined time (S15), the processing unit initialization means may start initialization so that the processing unit is operable to perform data communication with other processing units of other data transmission apparatuses (S19). In this case, the processing unit initialization means further includes communication anomaly detectionmeans (S22) for detecting anomalies of data communication during the started initialization. When the communication anomaly detection means detects the anomalies, the transmitting/receiving unit initialization means re-performs initialization by which clock synchronization is established between the transmitting/receiving unit and other transmitting/receiving units of other data transmission apparatuses.

The transmitting/receiving unit may generate the transmission signal by mapping the transmission data to any of a plurality (eight values) of signal levels. In this case, the transmitting/receiving unit initialization means performs initialization (S31, S32) by causing the transmitting/receiving unit to transmit (S312) an initialization signal (training signal TS) for identifying the signal levels to other data transmission apparatuses, receive (S313) an initialization signal transmitted from other data transmission apparatus, and set (S314) evaluation levels for identifying a signal level of the transmission signal using the initialization signal. Also, the transmitting/receiving unit initialization means may include evaluation level setting completion notification means (S321) for notifying the processing unit initialization means of completion of setting of evaluation levels (training completion flag I2) when the evaluation levels are set. In this case, the processing unit initialization means starts initialization (S19), in response to notification of a completion of evaluation level setting made by the evaluation level setting completion notification means (S17), by which the processing unit is operable to perform data communication with other processing units of other data transmission apparatuses via the transmitting/receiving unit. Furthermore, if no notification of a completion of evaluation level setting is made by the evaluation level setting completion notification means within a predetermined time (S18), the processing unit initialization means may start initialization (S19) so that the processing unit is operable to perform data communication with other processing units of other data transmission apparatuses via the transmitting/receiving unit. In this case, the processing unit initialization means further includes communication anomaly detection means (S22) for detecting anomalies of data communication during the started initialization. When the communication anomaly detection means detects the anomalies, the transmitting/receiving unit initialization means re-performs initialization for setting the evaluation levels.

For example, the communication protocol used by the processing unit is defined by MOST (Media Oriented Systems Transport).

A radiator (40a) for outputting a reference frequency may be further comprised. In this case, the processing unit and the transmitting/receiving unit separately include a phase lock loop (16a, 17a, 22a) for performing a process by establishing clock synchronization. Each phase lock loop included in the processing unit and the transmitting/receiving unit uses the reference frequency output from the radiator.

A data transmission system includes a plurality of data transmission apparatuses (1a to 1n) connected in a ring topology via a transmission path (2), by which the data transmission apparatuses perform unidirectional communication with each other. The data transmission apparatuses include respective processing units (20a to 20n) for processing transmission/reception data based on a predetermined communication protocol, respective transmitting/receiving units (10a to 10n) for generating a transmission signal (electric signal) based on the transmission data processed by the processing unit and outputting the resultant signal to other data transmission apparatus connected to a next stage, and generating reception data based on a transmission signal output from other data transmission apparatus connected to a previous stage and outputting the resultant data to the processing unit, transmitting/receiving unit initialization means (S12 to S18, S28 to S33, S42 to S45, S55 to s60) for initializing the transmitting/receiving unit so that the transmitting/receiving unit is operable to perform transmission/reception with other transmitting/receiving units of other data transmission apparatuses, and processing unit initialization means (S19 to S22, S24 to S26, S46 to S49, S51 toS53)) for initializing the processing unit so that the processing unit is operable to perform data communication with other processing units of other data transmission apparatuses via the transmitting/receiving unit after the transmitting/receiving unit initialization means initializes the transmitting/receiving unit.

The transmitting/receiving unit initialization means may initialize the transmitting/receiving unit (S29, S30, S56, S57) by establishing clock synchronization between the transmitting/receiving unit and other transmitting/receiving units of other data transmission apparatuses. Also, the transmitting/receiving unit initialization means may include clock synchronization establishment notification means for notifying the processing unit initialization means of establishment of clock synchronization when the clock synchronization is established. In this case, the processing unit initialization means starts initialization, in response to clock synchronization establishment notification made by the clock synchronization establishment notification means, by which the processing unit is operable to perform data communication with other processing units of other data transmission apparatuses via the transmitting/receiving unit. Furthermore, if no clock synchronization establishment notification is made by the clock synchronization establishment notification means within a predetermined time, the processing unit initialization means may start initialization so that the processing unit is operable to perform data communication with other processing units of other data transmission apparatuses via the transmitting/receiving unit. In this case, the processing unit initialization means further includes communication anomaly detection means for detecting anomalies of data communication during the started initialization. When the communication anomaly detection means detects the anomalies, the transmitting/receiving unit initialization means re-performs initialization by which clock synchronization is established between the transmitting/receiving unit and other transmitting/receiving units of other data transmission apparatuses.

The transmitting/receiving unit may generate the transmission signal by mapping the transmission data to any of a plurality of signal levels. In this case, the transmitting/receiving unit initialization means performs initialization (S31, S32, S58, S59) by causing the transmitting/receiving unit to transmit (S312, S582) an initialization signal for identifying the signal levels to other data transmission apparatuses connected to a next stage, receive (S313, S581) an initialization signal transmitted from other data transmission apparatus connected to a previous stage, and set evaluation levels (S314, S583) for identifying a signal level of the transmission signal using the initialization signal. Also, the transmitting/receiving unit initialization means may include evaluation level setting completion notification means (S321, S591) for notifying the processing unit initialization means of completion of setting of evaluation levels when the evaluation levels are set. In this case, the processing unit initialization means starts initialization (S19, S46), in response to notification of a completion of evaluation level setting made by the evaluation level setting completion notification means (S17, S44) , by which the processing unit is operable to perform data communication with other processing units of other data transmission apparatuses via the transmitting/receiving unit. Furthermore,if no notification of a completion of evaluation level setting is made by the evaluation level setting completion notificationmeans within apredetermined time (S18, S45), the processing unit initialization means may start initialization so that the processing unit is operable to perform data communication with other processing units of other data transmission apparatuses via the transmitting/receiving unit. In this case, the processing unit initialization means further includes communication anomaly detection means (S22, S49) for detecting anomalies of data communication during the started initialization. When the communication anomaly detection means detects the anomalies, the transmitting/receiving unit initialization means re-performs initialization for setting the evaluation levels.

For example, the communication protocol used by the processing unit is defined by MOST.

Each data transmission apparatus may further include a radiator (40a) for outputting a reference frequency. In this case, the processing unit and the transmitting/receiving unit separately include a phase lock loop (16a, 17a, 22a) for performing a process by establishing clock synchronization. Each phase lock loop included in the processing unit and the transmitting/receiving unit uses the reference frequency output from the radiator.

An initialization method of the present invention initializes a data transmission apparatus generating a transmission signal corresponding to data to be processed based on a predetermined communication protocol, and transmitting/receiving the transmission signal to/from other data transmission apparatus. By the initialization method, a physical layer (10a), which generates a transmission signal corresponding to transmission data processed based on the communication protocol, which transmits the resultant signal, andwhich generates reception data based on a transmission signal output from other data transmission apparatus, and other physical layers (10b to 10n) of other data transmission apparatuses are initialized so as to be operable to transmit/receive the transmission signal, and after initialization of the physical layers, a link layer (20a), which processes the transmission data and the reception data based on the communication protocol, and other link layers (20b to 20n) of other data transmission apparatuses are initialized so as to be operable to perform data communication via the physical layer .

Initialization of the physical layer may be performed by establishing clock synchronization between the physical layer and other physical layers of other data transmission apparatuses. Also, when the clock synchronization is established in initialization of the physical layer, establishment of the clock synchronization may be notified. In this case, in response to notification of establishment of the clock synchronization, initialization is started so that the link layer and other link layers of other data transmission apparatuses are operable to perform data communication via the physical layer. Furthermore, if no notification of establishment of the clock synchronization is made within a predetermined time, initialization may be started so that the link layer and other link layers of other data transmission apparatuses are operable to perform data communication via the physical layer. In this case, when anomalies of data communication are detected during the started initialization, initialization for establishing clock synchronization between the physical layer and other physical layers of other data transmission apparatuses is re-performed.

The transmission signal may be generated from the transmission data which is mapped to any of a plurality of signal levels by the physical layer. In this case, initialization of the physical layer is performed by transmitting an initialization signal for identifying the signal levels, from the physical layer to other data transmission apparatuses, and setting evaluation levels for identifying a signal level of the transmission signal using an initialization signal after the physical layer receives the initialization signal transmitted from other data transmission apparatus. Also, in the initialization of the physical layer, notification of a completion of evaluation level setting may be made when the evaluation levels are set. In this case, in response to notification of a completion of evaluation level setting, initialization by which the link layer and other link layers of other data transmission apparatuses are operable to perform data communication via the physical layer is started. Furthermore, if no notification of a completion of evaluation level setting is made within a predetermined time, initialization may be started so that the link layer and other link layers of other data transmission apparatuses are operable to perform data communication via the physical layer. In this case, when anomalies of data communication are detected during the started initialization, initialization for setting the evaluation levels is re-performed.

For example, the communication protocol is defined by MOST.

According to the data transmission apparatus of the present invention, the initialization processes of the processing units are started after completion of initialization processes of the transmitting/receiving units. Thus, at the time of initialization of the processing units, the transmitting/receiving units are in a state where they can perform communication. As a result, it is possible to use an initialization program (an API which is supplied assuming that physical layers requiring no initialization process are used) designed assuming that physical layers are in a state where they can perform communication during the initialization period of the link layers while satisfying the above assumption. That is, it is possible to perform an initialization process of data communication while preventing accidental failures caused by use of the above initialization program. Also, when the above initialization program is used, the initialization period of the physical layer does not need to be adjusted, whereby development costs are not increased.

Also, it is possible to obtain the same effect as described above in the case where the transmitting/receiving unit and other transmitting/receiving units of other data transmission apparatuses are initialized by establishing clock synchronization so as to be operable to perform transmission/reception therebetween. Also, in the case where notification of establishment of clock synchronization is made, it is possible to perform initialization of the processing units after the transmitting/receiving units reliably establish clock synchronization. Furthermore, if clock synchronization is not established within a predetermined time, the system is started up again by re-performing the initialization operation, whereby it is possible to perform a normal initialization operation even if an anomaly such as an instantaneous power interruption occurs during initialization of the transmitting/receiving unit.

Also, it is possible to obtain the same effect as described above in the case where the transmitting/receiving units become operable to perform transmission/reception by mapping transmission data to any of a plurality of signal levels for generating a transmission signal and transmitting the resultant signal, and setting evaluation levels for identifying a signal level of the transmission signal. Also, if notification of a completion of evaluation level setting is made, it is possible to perform initialization of the processing units after the transmitting/receiving units reliably complete setting of the evaluation levels. Furthermore, if setting of evaluation levels is not completed in a predetermined time, the system is started up again by re-performing the initialization operation, whereby it is possible to perform a normal initialization operation even if an anomaly such as an instantaneous power interruption occurs during initialization of the transmitting/receiving unit.

Also, in the case where each phase lock loop included in the processing unit and the transmitting/receiving unit uses a reference frequency output from the same radiator, a radiator (102a) which is used for the processing unit and provided in the conventional master data transmission apparatus (100a) is unnecessary, whereby it is possible to reduce the cost of parts.

Also, according to the data transmission system and the initialization method of the present invention, it is possible to obtain the same effect as described above.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing the structure of a data transmission system according to an embodiment of the present invention;
FIG. 2 is a flowchart showing an initialization process of a master data transmission apparatus 1a in the data transmission system of FIG. 1;
FIG. 3 is a flowchart showing an initialization process of slave data transmission apparatuses 1b to In in the data transmission system of FIG. 1;
FIG. 4 is a flowchart including a sub-routine of an initialization process performed in steps S29 to S32 of FIG. 2 in a master transmitting/receiving unit 10a, and a sub-routine of an initialization process performed in steps S56 to S59 of FIG. 3 in slave transmitting/receiving units 10b to 10n;
FIG. 5 is a time-series initialization sequence diagram showing initialization of data transmission apparatuses 1a to 1n in an initialization process of link and physical layers of the data transmission system of FIG. 1;
FIG. 6 is a block diagram showing the structure of a conventional data transmission system;
FIG. 7 is a flowchart showing an initialization process of a master data transmission apparatus 100a in the data transmission system of FIG. 6; and
FIG. 8 is a time-series initialization sequence diagram showing initialization of data transmission apparatuses 100a to 100n in an initialization process of link and physical layers of the data transmission system of FIG. 6.

### DESCRIPTION OF THE PREFERRED EMBODIMENTS

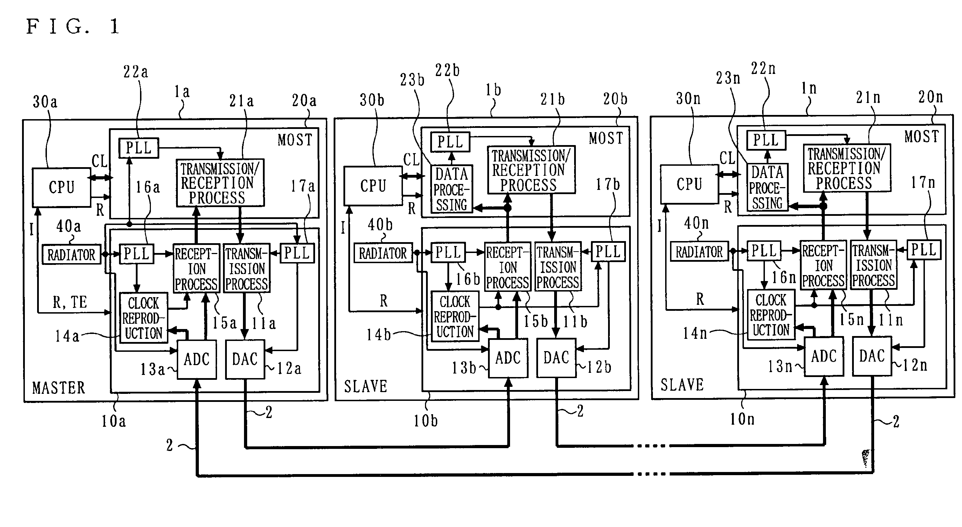

With reference to FIG. 1, a data transmission system according to an embodiment of the present invention will be described. Note that FIG. 1 is a block diagram showing the structure of the data transmission system.

In FIG. 1, the data transmission system employs a ring topology as its physical topology, in which a plurality of nodes are connected in a ring topology forming a unidirectional ring-type LAN. Hereinafter, as an example of the above data transmission system, a system in which n (n is an arbitrary integer greater than or equal to two) stages of data transmission apparatuses 1a to 1n (nodes) are connected in a ring topology by a transmission path 2, and transmission data is transmitted in one direction through the transmission path 2 will be described. A device (for example, an audiovisual device, a navigation device, or an information terminal device, which is not shown) for performing processing based on data transmitted through the data transmission system and outputting the processing results to the data transmission system is connected to each of the data transmission apparatuses 1a to 1n. Note that, as a typical configuration of hardware, each of the data transmission apparatuses 1a to 1n is united with its connected device.

One example of an information communication protocol used in the above data transmission system is Media Oriented Systems Transport (hereinafter, referred to as MOST). Data to be transmitted using MOST as a communication protocol is transmitted on a frame-by-frame basis, such that frames are sequentially transmitted through the data transmission apparatuses 1 in one direction. That is, the data transmission apparatus 1a outputs data to the data transmission apparatus 1b via the transmission path 2. Likewise, the data transmission apparatus 1b outputs data to the data transmission apparatus 1c via the transmission path 2, and the data transmission apparatus in a previous stage of the data transmission apparatus In outputs data to the data transmission apparatus In via the transmission path 2. Then, the data transmission apparatus 1n outputs data to the data transmission apparatus 1a via the transmission path 2. Inexpensive cables such as twisted pair cables or coaxial cables are used as the transmission path 2, and the data transmission apparatuses 1 perform electrical communication with each other. Here, when power to the data transmission system is turned on, the data transmission apparatus 1a is a master which transmits data based on its clock, and other data transmission apparatuses 1b to 1n are slaves which lock their frequencies to a clock generated by the master.

Next, the structure of the data transmission apparatus 1 will be described. Note that the data transmission apparatuses 1a to 1n have the same structure, and therefore the structure of the master data transmission apparatus 1a and a flow of transmission/reception data therefrom/to will be described first as an example.

In FIG. 1, the data transmission apparatus 1a includes a transmitting/receiving unit (physical layer), a MOST controller 20a (link layer) , a CPU (central processing unit: micro computer) 30a, and a radiator 40a. The transmitting/receiving unit 10a includes a transmission processing unit 11a, a DAC (D/A converter) 12a, an ADC (A/D converter) 13a, a clock reproducing unit 14a, a reception processing unit 15a, and PLLs (Phase Locked Loop) 16a and 17a. Also, the MOST controller 20a includes a transmission/reception processing unit 21a and a PLL 22a.

For example, as the MOST controller 20a, a MOST controller chip, etc., which is an LSI chip implementing the communication protocol used in the above data transmission system, is used. The connected device is connected to the transmission/reception processing unit 21a of the MOST controller 20a. The connected device processes data output from the MOST controller 20a. Also, the connected device outputs the processing results to the MOST controller 20a. The transmission/reception processing unit 21a has a function, for example, of converting data from the connected device into a protocol defined by MOST based on a frequency output from the PLL 22a, and outputting a digital data string to the transmission processing unit 11a of the transmitting/receiving unit 10a. Also, the transmission/reception processing unit 21a receives the digital data string output from the reception processing unit 15a based on the frequency output from the PLL 22a, and transmits the received digital data string to the connected device.

The CPU 30a controls the MOST controller 20a, the transmitting/receiving unit 10a, and the connected device, which are included in the data transmission apparatus 1a, by a reset signal R and a control signal CL. For example, the CPU 30a controls a resetfunction,power control,master/slaveselection,andswitch to diagnosis mode, etc., of the data transmission apparatus 1a.

The transmitting/receiving unit 10a is typically composed of LSI. As described above, the digital data string is output from the transmission/reception processing unit 21a of the MOST controller 20a to the transmission processing unit 11a. The transmission processing unit 11a combines a predetermined number of bits of data in the above digital data string to make data symbols, and performs mapping, on the basis of a conversion table, and filtering for the data symbols. Specifically, the transmission processing unit 11a performs serial-to-parallel conversion for the digital data string, which is output from the transmission/reception processing unit 21a, in order to perform multi-value transmission. In the case where the communication protocol is MOST, the transmission/reception processing unit 21a outputs the digital data string in bi-phase code, and therefore the transmission processing unit 11a converts input serial data into 2-bit parallel data. Then, the transmission processing unit 11a maps the converted 2-bit parallel data to one of eight symbols based on a locked system clock output from the PLL 17a. In the above mapping, 2-bit parallel data is alternately mapped to one of upper four symbols and one of lower four symbols of the eight symbols so that clock reproduction is performed in other data transmission apparatuses 1 on a receiving side. Also, in order to eliminate the influence of fluctuation or difference of direct current component between transmission and reception, mapping is performed on the basis of a difference between a current value and a previous value. Also, a filtering process performed by the transmission processing unit 11a is performed, for example, by a roll off filter. The roll off filter is awaveform shaping circuit for minimizing band limitation and intersymbol interference of an electric signal to be transmitted. As the roll off filter, for example, an FIR filter with a roll off rate of 1 is used.

The DAC 12a converts the signal, for which mapping and filtering processes are performed by the transmission processing unit 11a, into an analog signal. For example, the DAC 12a, which is a 12-bit D/A converter operating at 100MHz, outputs an analog signal so as to be capable of outputting a sinusoidal wave in which the above transmission symbol values alternately become maximum or minimum at an output terminal of a differential driver (not shown) on a transmitting side. The differential driver amplifies an intensity of the analog signal output from the DAC 12a for converting it into a differential signal, and sends the differential signal to the transmission path 2. The above differential driver transmits an electric signal to be sent to one conducting wire (plus side) of the transmission path 2, and transmits a signal having opposite polarities to the other conducting wire (minus side) of the transmission path 2. As a result, electric signals are transmitted over the plus and minus sides of the transmission path 2, respectively, as apair of signals, thereby canceling out each other's electric signal change. Thus, it is possible to reduce radiation noise from the transmission path 2 and electrical influences from outside. As such, the digital signal, for which the mapping and filtering processes are performed by the transmission processing unit 11a, is output as a waveform having a predetermined cycle, which is composed of a plurality of signal levels to one of which the above digital data string is mapped.

On the other hand, the ADC 13a receives the analog signal output from the data transmission apparatus 1n via the transmission path 2, and converts the received analog signal into a digital signal. Specifically, a differential receiver (not shown) on the receiving side converts a differential signal input from the transmission path 2 into a voltage signal, and outputs the voltage signal to the ADC 13a. As described above, electric signals are transmitted over the plus and minus sides of the transmission path 2, respectively, as a pair of signals. The differential receiver determines whether the signal is plus or minus based on a difference between the plus and minus sides of the transmission path 2, thereby being effective against electrical influences from outside. Then, the ADC 13a converts the voltage signal output from the differential receiver on the receiving side into a digital signal.

The reception processing unit 15a decodes the digital signal converted by the ADC 13a into data symbols byfiltering and mapping processes, converts the data symbols into a digital data string, and outputs the digital data string to the transmission/reception processing unit 21a of the MOST controller 20a. The filtering process performed by the reception processing unit 15a is performed, for example, by a roll off filter. This roll of f filter is an FIR filter for waveform shaping, which performs noise reduction for the digital signal output from the ADC 13a. The above-described roll off filters on the transmitting and receiving sides realize roll off characteristics without intersymbol interference. Then, the reception processing unit 15a performs an arithmetic operation on a difference value between the currently received symbol value, which is output from the roll off filter, and the previous symbol value, based on data symbol timing detected by the clock reproducing unit 14a. As such, the currently received symbol value is evaluated based on a difference value between the currently received symbol value and the previous symbol value, whereby it is possible to cancel overall voltage changes occurred when transmission is performed from the data transmission apparatus 1 on the transmitting side to the data transmission apparatus 1 on the receiving side. Then, the reception processing unit 15a performs data evaluation for each difference value based on evaluation levels set in an initialization process, which will be described below, andperforms inverse mapping for the resultant evaluation value. The inverse mapping performed by the reception processing unit 15a decodes the above evaluation value back into parallel data (data prior to the mapping process performed on the transmitting side) based on data symbol timing detected by the clock reproducing unit 14a. Then, the reception processing unit 15a converts the parallel data, for which the inverse mapping is performed, into a serial digital data string, and outputs it to the transmission/reception processing unit 21a.

The clock reproducing unit 14a performs clock reproduction of the transmission path 2 by reproducing a clock component of the signal, which is output from the ADC 13a and received from the transmission path 2, based on the PLL 16a, and detects data symbol timing, which is the maximum or minimum amplitude point of the above transmission waveform. Then, the clock reproduced by the clock reproducing unit 14a is used as a clock of the reception processing unit 15a.

Here, components whose functions are different between the master data transmission apparatus 1a and the slave data transmission apparatuses 1b to 1n will be described. The radiator 40a provided in the master data transmission apparatus 1a outputs a reference frequency used between the PLLs 16a, 17a, and 22a, and the ADC 13a. The PLL 16a outputs a frequency used when the clock reproducing unit 14a and the reception processing unit 15a perform processing. The PLL 17a outputs a frequency used when the transmission processing unit 11a and the DAC 12a perform processing. Likely, the PLL 22a outputs a frequency used when the transmission/reception processing unit 21a performs processing.

On the other hand, the MOST controllers 20b to 20n of the respective slave data transmission apparatuses 1b to 1n include respective data processing units 23b to 23n. The radiators 40b to 40n provided in the respective slave data transmission apparatuses 1b to 1n output reference frequencies used between the respective PLLs 16b to 16n and the respective ADCs 13b to 13n on the receiving side. Reference frequencies of the PLL 17b to 17n on the transmitting side are output from the respective clock reproducing units 14b to 14n. As reference frequencies of the PLLs 22b to 22n provided in the respective MOST controllers 20b to 20n, clocks processed by the respective data processing units 23b to 23n are used. Note that the data processing units 23b to 23n process clock components of the digital data strings received by the respective transmission/reception units 21b to 21n. Other than the above components, the structures of the slave data transmission apparatuses 1b to 1n are identical to the structure of the master data transmission apparatus 1a. Hereinafter, when the component units of the slave data transmission apparatuses 1b to 1n are described, these component units will be described by attaching reference marks "b" to "n" thereto in place of a reference mark "a" attached to the respective component units of the master data transmission apparatus 1a.

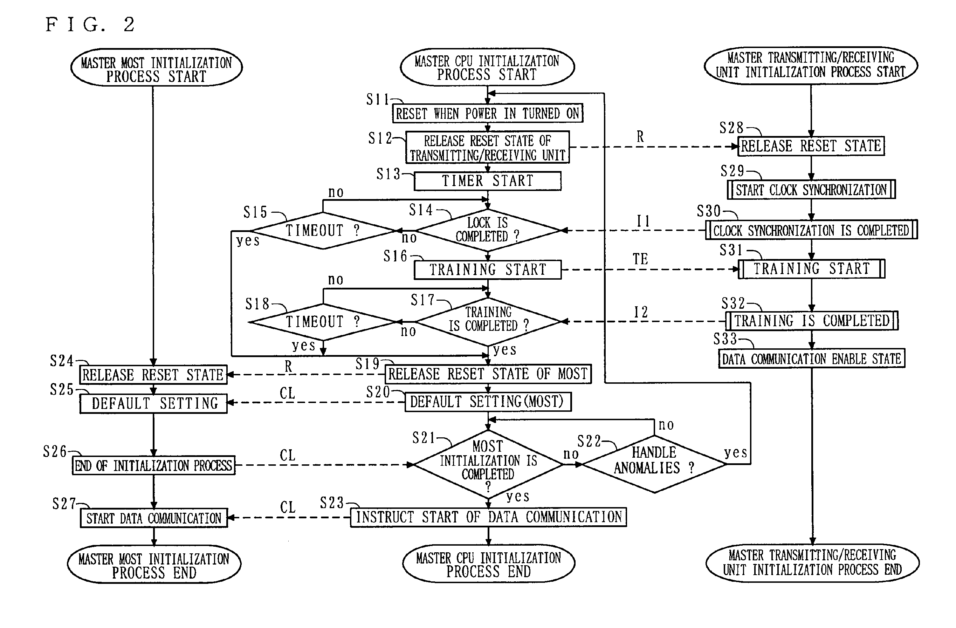

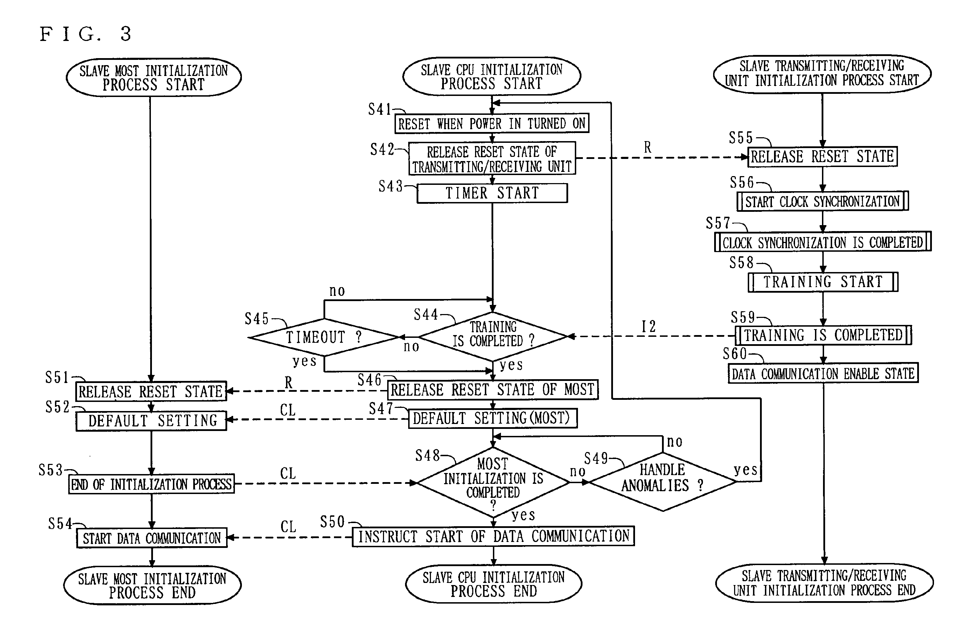

In the data transmission system structured as described above, in order to define a mechanical connection, an initialization process is performed for the MOST controllers 20a to 20n, which are protocol link layers, and the transmission/reception units 10a to 10n, which are protocol physical layers, and establishment of clock synchronization of the data transmission apparatuses 1a to 1n (lock process) and setting of evaluation levels used as a reference for data evaluation (training process) are performed during the above initialization operation. Hereinafter, with reference to FIGS. 1 to 3, an initialization process in the data transmission system will be described. Note that FIG. 2 is a flowchart showing an initialization process of the master data transmission apparatus 1a in the data transmission system, and FIG. 3 is a flowchart showing an initialization process of the slave data transmission apparatuses 1b to 1n in the data transmission system.

First, with reference to FIG. 2, the initialization process of the master data transmission apparatus 1a will be described. The CPU 30a of the master data transmission apparatus 1a is reset when power is turned on (step S11), and outputs, to the transmitting/receiving unit 10a, a reset signal R for releasing an initial standby state (hereinafter, referred to as a reset state) of the transmitting/receiving unit 10a (step S12).

The master transmitting/receiving unit 10a exits from a reset state by receiving the reset signal R transmitted from the CPU 30a in step S12 (step S28) , and performs an initialization process for itself (physical layer) (steps S29 to S32). In this initialization process, the transmitting/receiving units 10b to 10n, which are other protocol physical layers , are also initialized in order to define a mechanical connection. Also, in the initialization process of the transmitting/receiving unit 10a, establishment of clock synchronization (lock process) and setting of evaluation levels (training process) used as a reference for data evaluation are performed between the transmitting/receiving unit 10a and the slave transmitting/receiving units 10b to 10n. The above lock process is performed during a period (lock period) from start of clock synchronization (step S29) until completion of clock synchronization (step S30). At the time of completion of clock synchronization, the transmitting/receiving unit 10a outputs a clock synchronization completion flag I1 to the CPU 30a. Also, the CPU 30a outputs a training start enable signal TE to the transmitting/receiving unit 10a, thereby starting the above training process. The above training process is performed during a period (training period) from start of training (step S31) until completion of training (step S32). At the time of completion of training, the transmitting/receiving unit 10a outputs a training completion flag 12 to the CPU 30a. After completion of the initialization process from steps S29 to S32, the master transmitting/receiving unit 10a is in a state where it can perform data communication with other transmitting/receiving units 10b to 10n (step S33). Note that details of the initialization process performed in steps S29 to S32 by the transmitting/receiving unit 10a will be described further below.

On the other hand, the CPU 30a starts a timer for managing a time required for the initialization process (step S13), and waits for the clock synchronization completion flag I1 output from the transmitting/receiving unit 10a to be input for determining whether or not the lock process by the transmitting/receiving unit 10a is completed (step S14). If the clock synchronization completion flag I1 is not input, the CPU 30a determines whether or not a time set for the lock process has elapsed (timeout) (step S15), and repeats the above process in step S14 until timeout. If the clock synchronization completion flag I1 is input before timeout, the CPU 30a proceeds to a process in step S16. On the other hand, if the time set for the lock process has elapsed without input of the clock synchronization completion flag I1, the CPU 30a proceeds to a process in step S19.

In step S16, the CPU 30a outputs the training start enable signal TE to the transmitting/receiving unit 10a in order to start the above training process. Then, the CPU 30a waits for the training completion flag I2 output from the transmitting/receiving unit 10a to be input for determining whether or not the training process by the transmitting/receiving unit 10a is completed (step S17). If the training completion flag 12 is not input, the CPU 30a determines whether or not a time set for the training process has elapsed (timeout) (step S18), and repeats the above process in step S17 until timeout. If the training completion flag I2 is input before timeout, or if the time set for the training process has elapsed without input of the training completion flag I2, the CPU 30a proceeds to a process in step S19.

In step S19, the CPU 30a outputs, to the MOST controller 20a, a reset signal R for releasing a reset state of the MOST controller 20a (step S19). Then, the CPU 30a outputs, to the MOST controller 20a, a control signal CL for resetting the MOST controller 20a to its default setting (step S20). For example, by the above control signal CL, the CPU 30a instructs fixed default settings in the data transmission system such as master/slave selection of the MOST controller 20a.

The MOST controller 20a exits from a reset state in response to reception of the reset signal R (step S24), and resets itself to its default setting in response to reception of the control signal CL (step S25). Note that the PLL 22a included in the MOST controller 20a operates using a frequency output from the radiator 40a as a reference frequency.

In the initialization process started in step S25, the MOST controller 20a determines whether or not a network of the entire data transmission system is established. For example, the MOST controller 20a (link layer) sends a network establishment verification signal via the transmitting/receiving unit 10a (physical layer) of the data transmission system, and determines that the network is established if a predetermined times of reception of the above signal is carried out by the MOST controller 20a via other data transmission apparatuses 1b to 1n and the transmitting/receiving unit 10a. At this time, the transmitting/receiving units 10b to 10n of the data transmission system have already been in a state where they can perform data communication, whereby it is possible to immediately determine that the network is established. Then, the MOST controller 20a assigns an identifier indicating establishment of the network to a predetermined data frame, and transmits the data frame to other slave data transmission apparatuses 1b to 1n. After the network is established, the MOST controller 20a ends the process for initializing itself (link layer), and outputs a control signal CL indicating the end of the initialization process to the CPU 30a (step S26).

On the other hand, the CPU 30a waits for the MOST controller 20a to end the initialization process (step S21). If the initialization process of the MOST controller 20a is not ended within a predetermined time (for example, if the initialization process of the physical layers is not completed normally), the CPU 30a handles anomalies of the network (step S22), and returns the process to step S11. If the control signal CL indicating the end of the initialization process is received, the CPU 30a determines that the initialization process is ended. Then, the CPU 30a outputs a control signal CL instructing start of data communication to the MOST controller 20a (step S23). The MOST controller 20a receives the control signal CL instructing start of data communication, and starts data communication with other data transmission apparatuses 1 (step S27), whereby the initialization process of the master data processing apparatus 1a is ended.

Next, with reference to FIG. 3, the initialization processes of the slave data transmission apparatuses 1b to 1n will be described. The CPUs 30b to 30n of the respective slave data transmission apparatuses 1b to 1n are reset when power is turned on (step S41), and output, to the respective transmitting/receiving units 10b to 10n, reset signals R for releasing reset states of the transmitting/receiving units 10b to 10n (step S42).

The slave transmitting/receiving units 10b to 10n exit from their reset states in response to reception of the reset signals R transmitted from the respective CPUs 30b to 30n in step S42 (step S55), and perform an initialization process for themselves (physical layer) (steps S56 to S59). As is the case with the initialization process of the master transmitting/receiving unit 10a, also in this initialization processes of the slave transmitting/receiving units 10b to 10n, establishment of clock synchronization (lock process) and setting of evaluation levels (training process) used as a references for data evaluation are performed. The above lock process is performed during a period (lock period) from start of clock synchronization (step S56) until completion of clock synchronization (step S57). The above training process is performed during a period (training period) from start of training (step S58) until completion of training (step S59). At the time of completion of training, the transmitting/receiving units 10b to 10n output training completion flags I2 to the respective CPUs 30b to 30n. After completion of the initialization process from steps S56 to S59, the slave transmitting/receiving units 10b to 10n are in a state where they can perform data communication with each other (step S60). Note that details of the initialization process performed by the respective transmitting/receiving units 10b to 10n in steps S56 to S59 will be further described below.

On the other hand, the CPUs 30b to 30n start timers for managing a time required for the initialization process (step S43). Then, the CPUs 30b to 30n wait for a training completion flag I2 to be output from the respective transmitting/receiving units 10b to 10n, and determine whether or not the training processes of the transmitting/receiving units 10b to 10n are completed (step S44). If the training completion flag 12 is not input, the CPUs 30b to 30n determine whether or not a time set for the respective training periods has elapsed (timeout) (step S45), and repeat the process in step S44 until timeout. If the training completion flag I2 is input before timeout, or if the time set for the training process has elapsed without input of the training completion flag 12, the CPUs 30b to 30n proceed to a process in step S46.

In step S46, the CPUs 30b to 30n output, to the respective MOST controllers 20b to 20n, reset signals R for releasing reset states of the MOST controllers 20b to 20n (step S46). Then, the CPUs 30b to 30n output, to the respective MOST controllers 20b to 20n, control signals CL for resetting the MOST controllers 20b to 20n to their default settings (step S47). For example, by the above control signals CL, the CPUs 30b to 30n instruct fixed default settings in the data transmission system such as master/slave selection of the MOST controllers 20b to 20n.

The MOST controllers 20b to 20n exit from their reset states in response to reception of the reset signals R (step S51), and reset themselves to their default settings in response to reception of the control signals CL.

In the initialization process started in step S51, the respective MOST controllers 20b to 20n determine whether or not a network of the entire data transmission system is established. For example, the MOST controllers 20b to 20n determine that the network is established if a data frame, to which an identifier indicating establishment of the network is assigned, output from the master data transmission apparatus 1a is received during the initialization processes of the MOST controllers 20b to 20n. Also, clock components, which are obtained by the data processing units 23b to 23n as a result of processing digital data strings received by the transmission/reception processing units 21b to 21n, are used as reference frequencies of the PLLs 22b to 22n provided for the respective MOST controllers 20b to 20n. After establishment of the network, the MOST controllers 20b to 20n end the initialization processes for themselves (link layers) , and output control signals CL indicating the end of the initialization process to the respective CPUs 30b to 30n (step S56).

On the other hand, the CPUs 30b to 30n wait for the respective MOST controllers 20b to 20n to end the initialization processes (step S48). If the above initialization processes of the MOST controllers 20b to 20n are not ended within a predetermined time (for example, if the initialization process of the physical layers is not completed normally), the CPUs 30b to 30n handle anomalies of the network (step S49), and return the process to step S41. If the control signals CL indicating the end of the initialization process are received, the CPUs 30b to 30n determine that the initialization process is ended. Then, the CPUs 30b to 30n output, to the respective MOST controllers 20b to 20n, control signals CL for instructing start of data communication (step S50). The MOST controllers 20b to 20n receive the control signals CL instructing start of data communication, and start data communication with other data transmission apparatuses 1 (step S54), whereby the initialization processes of the slave data transmission apparatuses 1b to 1n are ended.

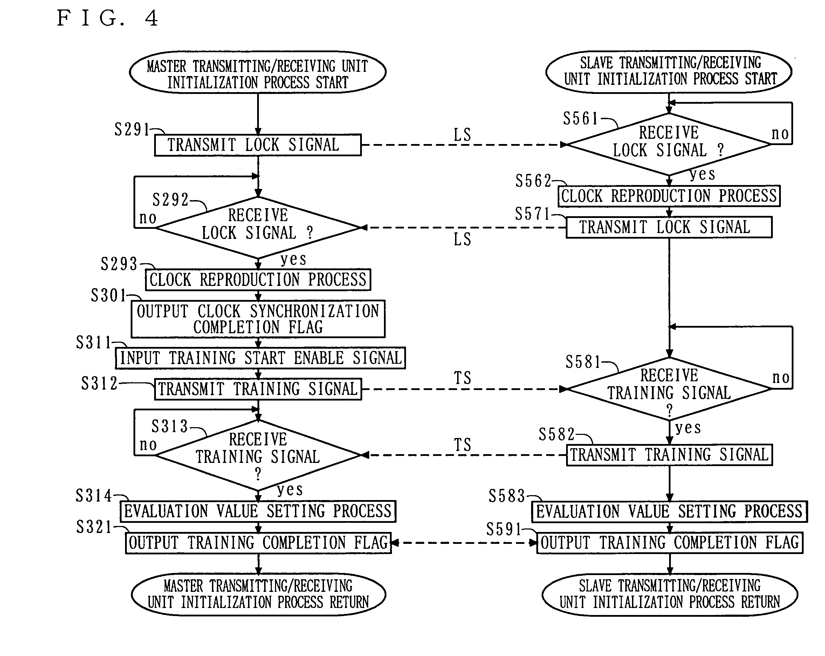

Next, with reference to FIG. 4, the initialization processes of the transmitting/receiving units 10a to 10n, which are performed in steps S29 to S32 and steps S56 to S59, will be described. FIG. 4 is a flowchart including a sub-routine of the initialization process performed in steps S29 to S32 in the master transmitting/receiving unit 10a, and a sub-routine of the initialization process performed in steps S56 to S59 in the slave transmitting/receiving units 10b to 10n. Note that power to the data transmission apparatuses 1a to 1n, which are connected to the data transmission system, is turned on in conjunction with turn-on of power at steps S11 and S41, and the transmitting/receiving units 10a to 10n exit from their reset states in response to reception of the reset signals R output from the respective CPUs 30a to 30n.

First, the master transmitting/receiving unit 10a transmits a lock signal LS to the data transmission path 2 based on a frequency output from the PLL 17a using theradiator 40a included in the master data transmission apparatus 1a as a reference frequency (step S291). For example, the lock signal LS is a sinusoidal wave signal based on a clock frequency of the PLL 17a included in the master data transmission apparatus 1a.

On the other hand, the slave transmitting/receiving unit 10b waits for the lock signal LS to be received from the transmission path 2 (step S561). If the lock signal LS transmitted from the master transmitting/receiving unit 10a via the transmission path 2 is received, the slave transmitting/receiving unit 10b performs clock reproduction by the clock reproducing unit 14b, and sets a reception PLL (step S562). Then, the slave transmitting/receiving unit 10b performs an input for the PLL 17b using the reproduced clock as a reference clock, and transmits the lock signal LS to the transmission path 2 based on the reproduction clock of the PLL 17b (step S571). Likely, the other slave transmitting/receiving units 10c to 10n continuously wait for the lock signal LS to be received (step S561). The respective slave transmitting/receiving units 10c to 10n transmit the lock signals LS to the respective data transmission apparatuses 1 in a next stage based on the reproduction clocks of the respective PLLs 17c to 17n (step S571) after receiving the lock signal LS sent from the data transmission apparatus in the previous stage, performing clock reproduction, and setting a reception PLL (step S562).

The master transmitting/receiving unit 10a waits for the lock signal LS to be received from the transmission path 2 (step S292). After the slave transmitting/receiving unit 10n connected to the previous stage executes step S571, the master transmitting/receiving unit 10a performs clock reproduction of the lock signal LS by the clock reproducing unit 14a, and sets a reception PLL (step S293). Then, the master transmitting/receiving unit 10a outputs a clock synchronization completion flag I1 to the CPU 30a (step S301). That is, the lock processes performed by the transmitting/receiving units 10a to 10n are started in response to reception of the reset signals R output from the respective CPUs 30a to 30n. Also, the above lock process performed by the transmitting/receiving unit 10a is completed by outputting the clock synchronization completion flag I1 to the CPU 30a after the process in step S293. Likely, the above lock processes performed by the transmitting/receiving units 10b to 10n are completed by transmitting the lock signals CL to the respective data transmission apparatuses 1 in a next stage after the process in step S562.

Next, a training start enable signal TE is input into the master transmitting/receiving unit 10a from the CPU 30a (step S311). Then, the transmitting/receiving unit 10a generates a training signal TS for setting evaluation levels used as a reference for data evaluation with the slave transmitting/receiving unit 10b connected to a next stage, and transmits the training signal TS to the transmission path 2 (step S312). The training signal TS includes, for example, a sinusoidal wave for clock reproduction, whose maximum and minimum amplitude levels appear alternately, a training pattern header (for example, which holds a maximum or minimum amplitude level for a predetermined period) , and a training pattern which is a given data pattern of the data transmission apparatuses 1. As the training pattern, for example, a PN pattern signal producing various patterns and including the above eight transmission symbol values is used.

The slave transmitting/receiving unit 10b waits for the training signal TS to be received from the transmission path 2 (step S581). If the training signal TS transmitted from the master transmitting/receiving unit 10a via the transmission path 2 is received, the slave transmitting/receiving unit 10b immediately generates a training signal TS used for data evaluation with the data transmission apparatus 1c connected to a next stage, and transmits the training signal TS to the transmission path 2 (step S582). Then, the transmitting/receiving unit 10b sets evaluation levels used for threshold level evaluation of the transmission levels corresponding to the symbol values using the training signal TS received from the transmitting/receiving unit 10a, and sets evaluation values using the above evaluation levels as boundaries (step S583).

The other slave transmitting/receiving units 10c to 10n also wait for the training signal TS to be received (step S581). If the training signal TS sent from the data transmission apparatus 1 in the previous stage is received, each of the slave transmitting/receiving units 10b to 10n immediately transmits its training signal TS to the data transmission apparatus 1 in a next stage (step S582) . Then, each of the other transmitting/receiving units 10c to 10n also sets evaluation levels used for threshold level evaluation of the transmission levels corresponding to the symbol values using the training signal TS received from its previous-stage data transmission apparatus 1, and sets evaluation values using the above evaluation levels as boundaries (step S583).

The master transmitting/receiving unit 10a waits for the training signal TS to be received from the transmission path 2 (step S313). After the slave transmitting/receiving unit 10n executes step S562, the transmitting/receiving unit 10a sets evaluation values used for threshold level evaluation of the transmission levels corresponding to the data symbol values using the training signal TS received from the transmitting/receiving unit 10n, and sets evaluation values using the above evaluation levels as boundaries (step S314).

Next, the transmitting/receiving units 10a to 10n connected to the data transmission system output, to the respective CPUs 30a to 30n, a training completion flag I2 indicating completion of the training process, and end the initialization processes of the transmitting/receiving units (steps S321 and S591). Note that, in order to cause the transmitting/receiving units 10a to 10n to cooperate with each other for outputting the training completion flag 12, the master transmitting/receiving unit 10a may output, to the transmission path 2, a signal for helping the other transmitting/receiving units 10b to 10n output the training completion flag 12. Also, the transmitting/receiving units 10a to 10n may output the training completion flag 12 to the respective CPUs 30a to 30n when a predetermined time has elapsed after execution of an evaluation value setting process in step S314 or S583. That is, the training process performed by the transmitting/receiving unit 10a is started when the training enable signal TE output from the CPU30a is input thereto. Also, the training processes by the transmitting/receiving units 10b to 10n are started when the training signal TS is output from the respective previous-stage data transmission apparatuses 1. The above training processes by the transmitting/receiving units 10a to 10n are ended when the training completion flag 12 is output to the CPU 30a after the processes in steps S314 and S583.

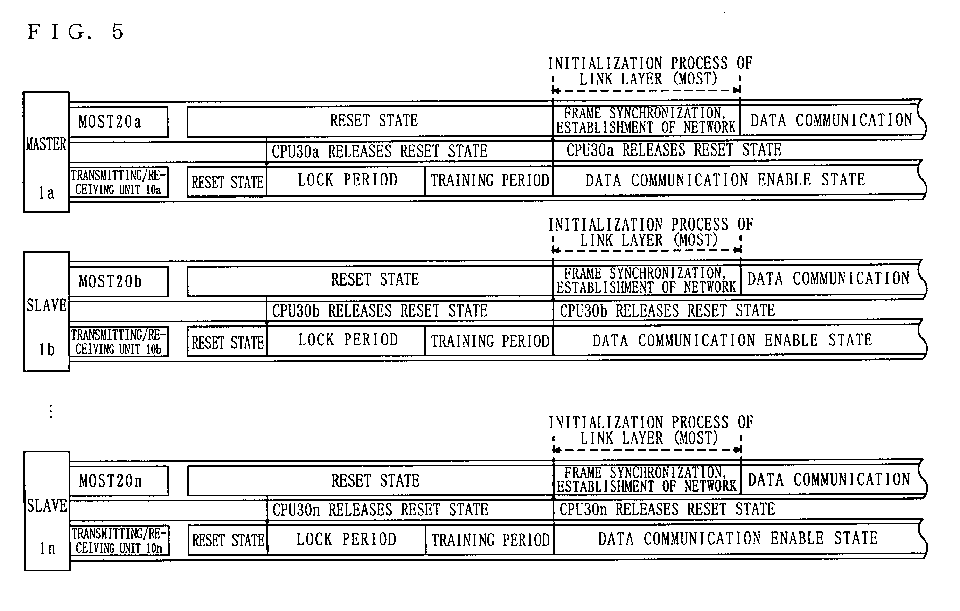

Next, with reference to FIG. 5, initialization of the data transmission apparatuses 1a to 1n in the above-described initialization process of the data transmission system will be described in time series. FIG. 5 is a time-series initialization sequence diagram showing initialization of the data transmission apparatuses 1a to 1n in the initialization process of the link and physical layers of the above-described data transmission system.

In FIG. 5, as compared with FIG. 8, in the initialization process of the master data transmission apparatus 1a, initialization periods (lock period and training period) of the physical layers (transmitting/receiving units 10a to 10n) are not included in an initialization period of the link layer (MOST controller 20a). That is, the initialization processes of the link layers according to the present embodiment are performed after the initialization processes of the respective physical layers are completed, whereby the initialization period of the link layer of the data transmission apparatus 1a is reduced compared to the conventional initialization sequence. Also, in the initialization periods of the link layers of the data transmission apparatuses 1a to 1n, the respective physical layers are in a state where they can perform data communication with each other. Thus, an initialization program (an API which is supplied assuming that physical layers requiring no initialization process are used) designed assuming that physical layers are in a state where they can perform communication during an initialization period of link layers can be used in the data transmission system while satisfying the above assumption.

As such, the initialization processes of the link layers of the data transmission system according to the present embodiment are started after the initialization processes of the respective physical layers are completed. Thus, at the time of initialization of the link layers, the respective physical layers can perform communication with each other. As a result, in the data transmission system in which electrical communication is performed, an initialization program (an API which is supplied assuming that physical layers requiring no initialization process are used) designed assuming that physical layers are in a state where they can perform communication during the initialization period of the link layers can be used while satisfying the above assumption. That is, it is possible to perform an initialization process of data communication while preventing accidental failures caused by use of the above initialization program in the data transmission system. Also, when the above initialization program is used in the data transmission system, the initialization period of the physical layer does not need to be adjusted, whereby development costs are not increased. Also, a radiator (the radiator 102a in FIG. 6) which is used for a MOST controller and provided in the conventional master data transmission apparatus is unnecessary, whereby it is possible to reduce the cost of parts used in the data transmission system.

Note that, in the descriptions of the present embodiment, a protocol defined by MOST is used as a link layer of the data transmission system, but the present invention is not limited to the protocol defined by MOST. For example, the present invention can also be applied to a custom link layer other than the link layer defined by MOST.

While the invention has been described in detail, the foregoing description is in all aspects illustrative and not restrictive. It is understood that numerous other modifications and variations can be devised without departing from the scope of the invention.

## Claims

1. A data transmission apparatus (1) for generating a transmission signal corresponding to data to be processed based on a predetermined communication protocol, and transmitting/receiving the transmission signal, the apparatus comprising:
a processing unit (20) for processing transmission/reception data based on the communication protocol;
a transmitting/receiving unit (10) for generating a transmission signal based on the transmission data processed by the processing unit (20) and outputting the resultant signal, and generating reception data based on a transmission signal output from other data transmission apparatus (1) and outputting the resultant data to the processing unit (20);
transmitting/receiving unit initialization means (S12 to S18, S28 to S33) for initializing the transmitting/receiving unit (10) so that the transmitting/receiving unit (10) is operable to perform transmission/reception with other transmitting/receiving units (10) of other data transmission apparatuses (1); and
processing unit initialization means (S19 to S22, S24 to S26) for initializing the processing unit (20) so that the processing unit (20) is operable to perform data communication with other processing units (20) of other data transmission apparatuses (1) via the transmitting/receiving unit (10) after the transmitting/receiving unit initialization means (S12 to S18, S28 to S33) initializes the transmitting/receiving unit (10).

2. The data transmission apparatus (1) according to claim 1, wherein the transmitting/receiving unit initialization means (S12 to S18, S28 to S33) initializes the transmitting/receiving unit (10) by establishing clock synchronization (S29, S30) between the transmitting/receiving unit (10) and other transmitting/receiving units (10) of other data transmission apparatuses (1).

3. The data transmission apparatus (1) according to claim 2, wherein
the transmitting/receiving unit initialization means (S12 to S18, S28 to S33) includes clock synchronization establishment notification means (S301) for notifying the processing unit initialization means (S19 to S22, S24 to S26) of establishment of clock synchronization when the clock synchronization is established, and
the processing unit initialization means (S19 to S22, S24 to S26) starts initialization, in response to clock synchronization establishment notification made by the clock synchronization establishment notification means (S301), by which the processing unit (20) is operable to perform data communication with other processing units (20) of other data transmission apparatuses (1) via the transmitting/receiving unit (10).

4. The data transmission apparatus (1) according to claim 3, wherein
if no clock synchronization establishment notification is made by the clock synchronization establishment notification means (S301) within a predetermined time, the processing unit initialization means (S19 to S22, S24 to S26) starts initialization so that the processing unit (20) is operable to perform data communication with other processing units (20) of other data transmission apparatuses (1) via the transmitting/receiving unit (10),
the processing unit initialization means (S19 to S22, S24 to S26) further includes communication anomaly detection means (S22) for detecting anomalies of data communication during the started initialization, and
when the communication anomaly detection means (S22) detects the anomalies, the transmitting/receiving unit initialization means (S12 to S18, S28 to S33) re-performs initialization by which clock synchronization is established between the transmitting/receiving unit (10) and other transmitting/receiving units (10) of other data transmission apparatuses (1).

5. The data transmission apparatus (1) according to claim 1, wherein
the transmitting/receiving unit (10) generates the transmission signal by mapping the transmission data to any of a plurality of signal levels, and
the transmitting/receiving unit initialization means (S12 to S18, S28 to S33) performs initialization by causing the transmitting/receiving unit (10):
to transmit an initialization signal (TS) for identifying the signal levels to other data transmission apparatuses (1); and
to receive an initialization signal (TS) transmitted from other data transmission apparatus (1), and set evaluation levels for identifying a signal level of the transmission signal using the initialization signal (TS).

6. The data transmission apparatus (1) according to claim 5, wherein
the transmitting/receiving unit initialization means (S12 to S18, S28 to S33) includes evaluation level setting completion notification means (S321) for notifying the processing unit initialization means (S19 to S22, S24 to S26) of completion of setting of evaluation levels when the evaluation levels are set, and
the processing unit initialization means (S19 to S22, S24 to S26) starts initialization, in response to notification of a completion of evaluation level setting made by the evaluation level setting completion notification means (S321), by which the processing unit (20) is operable to perform data communication with other processing units (20) of other data transmission apparatuses (1) via the transmitting/receiving unit (10).

7. The data transmission apparatus (1) according to claim 6, wherein
if no notification of a completion of evaluation level setting is made by the evaluation level setting completion notification means (S321) within a predetermined time, the processing unit initialization means (S19 to S22, S24 to S26) starts initialization so that the processing unit (20) is operable to perform data communication with other processing units (20) of other data transmission apparatuses (1) via the transmitting/receiving unit (10),
the processing unit initialization means (S19 to S22, S24 to S26) further includes communication anomaly detection means (S22) for detecting anomalies of data communication during the started initialization, and
when the communication anomaly detection means (S22) detects the anomalies, the transmitting/receiving unit initialization means (S12 to S18, S28 to S33) re-performs initialization for setting the evaluation levels.

8. The data transmission apparatus (1) according to claim 1, wherein the communication protocol used by the processing unit (20) is defined by MOST (Media Oriented Systems Transport) .

9. The data transmission apparatus (1) according to claim 1 further comprising a radiator (40) for outputting a reference frequency, wherein
the processing unit (20) and the transmitting/receiving unit (10) separately include a phase lock loop (16, 17, 22) for performing a process by establishing clock synchronization, and
each phase lock loop (16,17,22) included in the processing unit (20) and the transmitting/receiving unit (10) uses the reference frequency output from the radiator (40).

10. A data transmission system including a plurality of data transmission apparatuses (1) connected in a ring topology via a transmission path (2), by which the data transmission apparatuses (1) perform unidirectional communication with each other, wherein
each data transmission apparatus (1) includes:
a processing unit (20) for processing transmission/reception data based on a predetermined communication protocol;
a transmitting/receiving unit (10) for generating a transmission signal based on the transmission data processed by the processing unit (20) and outputting the resultant signal to other data transmission apparatus (1) connected to a next stage, and generating reception data based on a transmission signal output from other data transmission apparatus (1) connected to a previous stage and outputting the resultant data to the processing unit (20);
transmitting/receiving unit initialization means (S12 to S18, S28 to S33) for initializing the transmitting/receiving unit (10) so that the transmitting/receiving unit (10) is operable to perform transmission/reception with other transmitting/receiving units (10) of other data transmission apparatuses (1); and
processing unit initialization means (S19 to S22, S24 to S26) for initializing the processing unit (10) so that the processing unit (20) is operable to perform data communication with other processing units (20) of other data transmission apparatuses (1) via the transmitting/receiving unit (10) after the transmitting/receiving unit initialization means (S12 to S18, S28 to S33) initializes the transmitting/receiving unit (10).

11. The data transmission system according to claim 10, wherein the transmitting/receiving unit initialization means (S12 to S18, S28 to S33) initializes the transmitting/receiving unit (10) by establishing clock synchronization between the transmitting/receiving unit (10) and other transmitting/receiving units (10) of other data transmission apparatuses (1).

12. The data transmission system according to claim 11, wherein
the transmitting/receiving unit initialization means (S12 to S18, S28 to S33) includes clock synchronization establishment notification means (S301) for notifying the processing unit initialization means (S19 to S22, S24 to S26) of establishment of clock synchronization when the clock synchronization is established, and
the processing unit initialization means (S19 to S22, S24 to S26) starts initialization, in response to clock synchronization establishment notification made by the clock synchronization establishment notification means (S301), by which the processing unit (20) is operable to perform data communication with other processing units (20) of other data transmission apparatuses (1) via the transmitting/receiving unit (10).

13. The data transmission system according to claim 12, wherein
if no clock synchronization establishment notification is made by the clock synchronization establishment notification means (S301) within a predetermined time, the processing unit initialization means (S19 to S22, S24 to S26) starts initialization so that the processing unit (20) is operable to perform data communication with other processing units (20) of other data transmission apparatuses (1) via the transmitting/receiving unit (10),
the processing unit initialization means (S19 to S22, S24 to S26) further includes communication anomaly detection means (S22) for detecting anomalies of data communication during the started initialization, and
when the communication anomaly detection means (S22) detects the anomalies, the transmitting/receiving unit initialization means (S12 to S18, S28 to S33) re-performs initialization by which clock synchronization is established between the transmitting/receiving unit (10) and other transmitting/receiving units (10) of other data transmission apparatuses (1).

14. The data transmission system according to claim 10, wherein
the transmitting/receiving unit (10) generates the transmission signal by mapping the transmission data to any of a plurality of signal levels, and
the transmitting/receiving unit initialization means (S12 to S18, S28 to S33) performs initialization by causing the transmitting/receiving unit (10):
to transmit an initialization signal (TS) for identifying the signal levels to other data transmission apparatuses (1) connected to a next stage; and
to receive an initialization signal (TS) transmitted from other data transmission apparatus (1) connected to a previous stage, and set evaluation levels for identifying a signal level of the transmission signal using the initialization signal (TS).

15. The data transmission system according to claim 14, wherein
the transmitting/receiving unit initialization means (S12 to S18, S28 to S33) includes evaluation level setting completion notification means (S321) for notifying the processing unit initialization means (S19 to S22, S24 to S26) of completion of setting of evaluation levels when the evaluation levels are set, and
the processing unit initialization means (S19 to S22, S24 to S26) starts initialization, in response to notification of a completion of evaluation level setting made by the evaluation level setting completion notification means (S321) by which the processing unit (20) is operable to perform data communication with other processing units (20) of other data transmission apparatuses (1) via the transmitting/receiving unit (10).

16. The data transmission system according to claim 15, wherein
if no notification of a completion of evaluation level setting is made by the evaluation level setting completion notification means (S321) within a predetermined time, the processing unit initialization means (S19 to S22, S24 to S26) starts initialization so that the processing unit (20) is operable to perform data communication with other processing units (20) of other data transmission apparatuses (1) via the transmitting/receiving unit (10),
the processing unit initialization means (S19 to S22, S24 to S26) further includes communication anomaly detection means (S22) for detecting anomalies of data communication during the started initialization, and
when the communication anomaly detection means (S22) detects the anomalies, the transmitting/receiving unit initialization means (S12 to S18, S28 to S33) re-performs initialization for setting the evaluation levels.

17. The data transmission system according to claim 10, wherein the communication protocol used by the processing unit (20) is defined by MOST (Media Oriented Systems Transport).

18. The data transmission system according to claim 10, wherein
each data transmission apparatus (1) further includes a radiator (40) for outputting a reference frequency,
the processing unit (20) and the transmitting/receiving unit (10) separately include a phase lock loop (16, 17, 22) for performing a process by establishing clock synchronization, and
each phase lock loop (16,17,22) included in the processing unit (20) and the transmitting/receiving unit (10) uses the reference frequency output from the radiator (40).

19. An initialization method for initializing a data transmission apparatus (1) generating a transmission signal corresponding to data to be processed based on a predetermined communication protocol, and transmitting/receiving the transmission signal to/from other data transmission apparatus (1) , wherein
a physical layer (10), which generates a transmission signal corresponding to transmission data processed based on the communication protocol and transmits the resultant signal, and generates reception data based on a transmission signal output from other data transmission apparatus (1), and other physical layers (10) of other data transmission apparatuses (1) are initialized so as to be operable to transmit/receive the transmission signal, and
after initialization of the physical layers (10) , a link layer (20), which processes the transmission data and the reception data based on the communication protocol, and other link layers (20) of other data transmission apparatuses (1) are initialized so as to be operable to perform data communication via the physical layers (10).

20. The initialization method according to claim 19, wherein initialization of the physical layer (10) is performed by establishing clock synchronization between the physical layer (10) and other physical layers (10) of other data transmission apparatuses (1).

21. The initialization method according to claim 20, wherein
when the clock synchronization is established in initialization of the physical layer (10), establishment of the clock synchronization is notified, and
in response to notification of establishment of the clock synchronization, initialization is started so that the link layer (20) and other link layers (20) of other data transmission apparatuses (1) are operable to perform data communication via the physical layer (10).

22. The initialization method according to claim 21, wherein
if no notification of establishment of the clock synchronization is made within a predetermined time, initialization is started so that the link layer (20) and other link layers (20) of other data transmission apparatuses (1) are operable to perform data communication via the physical layer (10) , and
when anomalies of data communication are detected during thestarted initialization,initialization for establishing clock synchronization between the physical layer (10) and other physical layers (10) of other data transmission apparatuses (1) is re-performed.

23. The initialization method according to claim 19, wherein
the transmission signal is generated from the transmission data which is mapped to any of a plurality of signal levels by the physical layer (10), and
initialization of the physical layer (10) is performed by:
transmitting an initialization signal (TS) for identifying the signal levels, from the physical layer (10) to other data transmission apparatuses (1); and
setting evaluation levels for identifying a signal level of the transmission signal using an initialization signal (TS) after the physical layer (10) receives the initialization signal transmitted from other data transmission apparatus (1).

24. The initialization method according to claim 23, wherein
in the initialization of the physical layer (10), notification of a completion of evaluation level setting is made when the evaluation levels are set, and
in response to notification of a completion of evaluation level setting, initialization by which the link layer (20) and other link layers (20) of other data transmission apparatuses (1) are operable to perform data communication via the physical layer (10) is started.

25. The initialization method according to claim 24, wherein
if no notification of a completion of evaluation level setting is made within a predetermined time, initialization is started so that the link layer (20) and other link layers (20) of other data transmission apparatuses (1) are operable to perform data communication via the physical layer (10), and
when anomalies of data communication are detected during the started initialization, initialization for setting the evaluation levels is re-performed.

26. The initialization method according to claim 19, wherein the communication protocol is defined by MOST (Media Oriented Systems Transport).
